Europäisches Patentamt

European Patent Office

Office européen des brevets

(19)

(11) Publication number : **0 630 148 A1**

(12) **EUROPEAN PATENT APPLICATION**

(21) Application number : **94304263.0**

(22) Date of filing : **13.06.94**

(51) Int. Cl.⁵ : **H04N 1/40, H04N 1/18**

(30) Priority : **18.06.93 EP 93304766**

(43) Date of publication of application :
**21.12.94 Bulletin 94/51**

(84) Designated Contracting States :
**BE DE FR GB IT NL**

(71) Applicant : **XEIKON NV**
**Vredebaan 72**
**B-2640 Mortsel (BE)**

(72) Inventor : **De Schamphelaere, Lucien Amedé**
**Hovestraat 151**
**B-2650 Edegem (BE)**
Inventor : **Grobben, Alfons Jakob**
**Leeuwerikenstraat 84**
**B-3001 Heverlee (BE)**
Inventor : **Van Hulle, Koenraad Leontine**
**Edward**
**Lindelei 18**
**B-2630 Aartselaar (BE)**

(74) Representative : **Gambell, Derek**
**Hyde, Heide & O'Donnell**
**10-12 Priests Bridge**
**London SW15 5JE (GB)**

(54) **Recording module.**

(57) A recording module is described comprising a number of LEDs arranged in a linear array and means for gradation-controlling said LEDs, by changing their operative periods of time corresponding to recording gradation data having $2^n$ levels. The described circuit comprises an Nxn-bit shift register (34) having N n-bit storage addresses and N n-bit outputs and first clock means for controlling the shift register. The circuit also comprises a latch register (35) for storing the contents of the N n-bit storage addresses of the shift register, the latch register having N n-bit output paths. The circuit also comprises modulator means for establishing a relation between operative period of time and gradation data for each LED, and second clock means for controlling the modulator means. The shift register (34), the latch register (35) and the modulator means (38) are integrated on one semiconductor chip (22). The modulator means comprises N modulators (38), one for each LED.

Fig. 4a

Fig. 4b

EP 0 630 148 A1

## Field of the invention

The present invention relates to an recording module comprising a number of recording sources arranged in a linear array and means for gradation-controlling said recording sources. More in particular, the invention relates to the formation of images on a light-sensitive material by gradation-controlling an LED (light-emitting diode) array in an electronic printer, said gradations being obtained by modulating the pulse width of the current signals driving the LEDs.

## Background of the invention

In many existing non-impact printers, an image is recorded by repetitively producing lines of spots, each spot being formed by means of one of a number of recording sources which are arranged in a linear array, said recording sources delivering a controlled amount of energy to a receptor surface in order to form a latent image on said receptor surface. Also, said non-impact printers comprise means for developing said latent images and transferring the developed images to the output medium, being paper or the like. In practice, the recording sources are arranged in a number of recording modules, each recording module comprising a plurality of recording sources so that the manufacturing of said linear array of recording sources becomes more feasible.

In most cases, the recording sources are controlled in a binary manner, that is, each recording source is driven by means of a binary signal that switches the recording source either on or off. In order however to reproduce images containing multiple gradation levels, a technique called binary half-toning is used. With said binary half-toning, the impression of gradation is achieved by modulating the size of the pixels that constitute the image. In electronic printing for example, the pixels are therefore built up as matrices of small basic spots of a fixed size and density. Modulation of a pixel's size is then achieved by varying the number of spots, constituting said pixel, that are assigned to the higher of the possible two density levels. As an alternative for binary half-toning, some printers provide means to control the amount of energy emitted by each recording source so that each printed spot can have multiple gradation levels. It is clear that this technique is superior to binary half-toning since it allows images to be recorded with a much higher spatial resolution.

As an example of a printer incorporating recording sources being controlled in a binary manner, European patent EP-BI-0 142 579 (Agfa-Gevaert NV) discloses an electronic circuit controlling the operation of a recording module, said recording module comprising a plurality of LEDs being part of a linear array. The described electronic circuit comprises a shift register (i.e. a serial-in, parallel-out shift register) having N binary data storage addresses and N outputs, clock means for controlling said shift register, one or more binary latch registers for storing the contents of the N storage addresses of said shift register, said latch registers having N output paths controlling the respective driving circuits of the N LEDs.

For the reproduction of images containing multiple gradation levels, the linear array of recording sources is however preferably gradation-controlled. This can be obtained by providing multiple energy levels for each recording source, and since energy equals power times time, each one of the recording sources is typically driven with a constant output power level, for a period of time proportional to the gradation value of the respective spot. This approach is much easier to implement than the approach wherein the multiple energy levels are obtained by providing multiple levels of output power for a constant period of time. In printers where the recording sources comprise LEDs for example, multiple optical energy levels are obtained by driving each of the LEDs by means of a source of constant current or constant voltage during a precisely controlled amount of time.

Although the above described circuit operates in a binary manner, it is possible to use said circuit for recording multi-gradation images. Therefore, the line period $T_L$, during which the recording head is to write a full line of the image, is divided into $2^n$-1 sub-periods.

Consequently, the gradation data representing all the spots of an image line are, during each one of the said sub-periods numbered 0 to $2^n$-1, read from an intermediate line buffer memory. A comparator means compares each gradation value to the sub-period number and outputs a binary value being '1' only if the respective gradation value is smaller than the sub-period number. This binary value is then shifted to the above described shift register so as to enable the respective LED to be activated for the time the respective sub-period lasts. As this process Is repeated for every sub-period of a line, the operative period of the LEDs is in fact the sum of a number of sub-operative periods, said number being equal to the gradation value of the spot to be printed by means of the respective LED. Such an arrangement is for example described In United States patent US 4855760 (assigned to Fuji Photo Film Co., Ltd).

In this arrangement however, the frequency $f_c$ of the clock controlling the operation of the line buffer memory and the shift register is relatively high, that is:

$$f_C = (1/T_m) * (M * N),$$

wherein:

$T_m$ is the period (expressed in seconds) of the shortest of the $2^n$-1 sub-periods, (if all sub-periods are of equal length $T_m$ would equal $T_L / 2^n$-1);

M is the number of recording modules of which the recording head is composed; and

N is the number of recording sources per recording module.

For example, a printer with a gradational addressability of $2^8 = 256$ gradation levels and a spatial addressability of 600 spots per linear inch (600 spi) and with an imageable width of 12 inches ($M * N = 12 * 600 = 7200$), operating at a maximum speed of 5 inches per second ($T_L = 1/(5 * 600)$ seconds), would require a frequency $f_C$ of at least

$$(256 * 3000) * 7200 = 5,529,600,000 \text{ Hz} = 5.5 \text{ GHz.}$$

The high frequency of operation of the described circuit is caused by the fact that scanning of the line memory does not occur once per line, which would yield a frequency $f_C = (I/T_L) * (M * N)$, but on the contrary once for every sub-period of the line period. The consequence is that the shift and the latch registers, and also the line buffer memory, have to operate at correspondingly high frequencies which increases the cost and the power dissipation of these components, and adversely effects their reliability.

Summary of the invention

It is an object of the present invention to provide an Improved recording module of the type referred to, in which the signal frequencies are low, so that the reliability of the circuit Is increased, and the manufacturing cost and power consumption are reduced.

A further object of the invention is to provide a recording module circuit of the type referred to wherein the use of a separate line buffer memory is not required.

According to the invention, there is provided a recording module comprising N recording sources and means for gradation-controlling said recording sources by changing their operative periods of time corresponding to recording gradation data having $2^n$ levels, which recording module comprises:

an N x n-bit shift register having N n-bit gradation data storage addresses and N n-bit outputs, and first clock means for controlling said shift register;

storage means for storing the contents of the N n-bit gradation data storage addresses of said shift register; and

N modulators, one for each recording source, for establishing a relation between the operative period of time and the gradation data for each recording source, and second clock means for controlling said modulators.

The advantage of the recording module according to the invention is that the frequency $f_C$ of operation of the shift and latch registers now amounts to only $(1/T_L) * (M * N)$ and is independent of the number of addressable gradation levels. Furthermore, a line buffer memory is not required since now the latch register of each of the M recording modules itself operates as a buffer memory for N pixels of one image line.

Considering the present state of the art, the additional cost of introducing N modulators is not substantial. Also, the fact that the serial shift register and the storage means of the circuit have to be arranged to deal with n-bit signals rather than with a single-bit signal, does not significantly raise the cost of producing said recording module.

According to a suitable embodiment of the invention, said shift register, said storage means and said modulator means are integrated on one semiconductor chip.

According to a further suitable embodiment of the invention, said modulators are controlled by one modulator counter driven by said second clock means, said modulator counter supplying the number of the said sub-period to the modulators, said modulators comprising a comparator which asserts the control signal of the respective recording source as long as the modulator counter's value is smaller than the respective gradation value.

In another embodiment of the invention, said storage means are an integral part of said modulators, the latter comprising an n-bit down counter which, after being loaded with a gradation value, asserts the control signal of the respective recording source and counts down to zero after which said control signal is de-asserted.

In practice, the frequency $f_C$ can vary since the line frequency $f_L = (1/T_L)$ is preferably linearly related to the operational speed of the printer, which speed is likely to vary. In a preferred embodiment of the invention, said operational speed and consequently said line frequency is allowed to vary within a range of up to 20% from the average line frequency $f_L'$. The frequency $f_C$ is however fixed and preferably equals 1.20 times $f_L' * M * N$ so as to assure that the recording module is working correctly, even at the highest allowed line frequency $f_L^{max}$, which is 1.20 times $f_L'$.

The present invention relates in particular to printers using LEDs as recording sources, and the description hereinafter specifically deals with this type of active light source (as well as with other active sources such as used in thermal printers or ion-deposition printers), but the term "recording source" as used herein also covers passive sources such as LCDs or PLZT devices, that control the emission of light of a rod-like or similar elongate source of light.

It is known that in such printers, the evenness of the optical density of the different spots of the printed image largely depends on the evenness of the energy levels supplied by the respective recording sources. It is therefore preferred that a correction means is provided wherein the gradation data and thus the current or voltage supply time periods are adjusted corresponding to the unevenness of the energy output of the recording sources, thereby correcting said unevenness, as is known in the art and is for example described in US 4855760, referred to above.

Preferred embodiments of the invention

The invention will now be further described, purely by way of example, by reference to the accompanying drawings in which:

Figures 1 to 5 illustrate the working principles of a printer incorporating a plurality of recording modules according to a preferred embodiment of the invention, wherein:

Figure 1 shows a cross-sectional view of a recording head;

Figure 2 illustrates the positioning of the LED chip and the associated driver chips on a module carrier;

Figure 3 is a schematic of an electronic circuit controlling said recording head;

Figures 4a and 4b illustrate the operation of a driver circuit implementing a preferred method of modulating the operative period of the LEDs;

Figure 5 illustrates how the relation between the gradation data and the operative period of the LEDs is controlled;

Figures 6a and 6b illustrate a more preferred embodiment of the driver circuit of Figure 4a;

Figure 7 shows a block schematic illustrating the operation of another embodiment of a modulator; and

Figures 8a and 8b show a block schematic of two embodiments of the correction means.

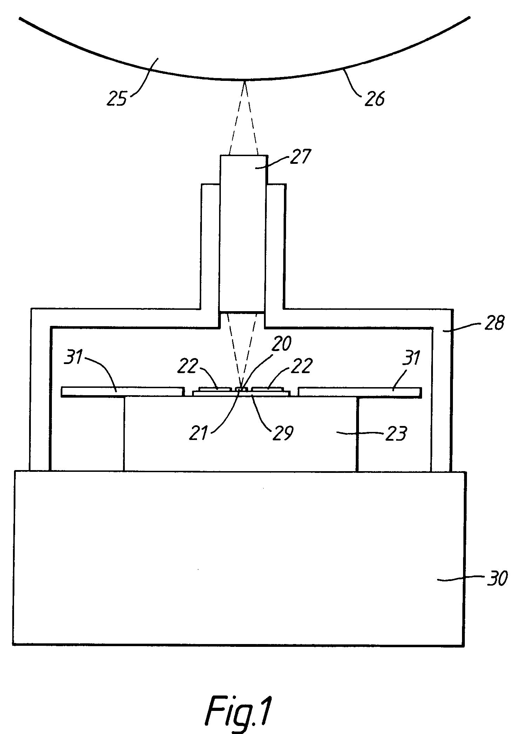

Figure 1 shows a cross-sectional view of a preferred embodiment of a recording head incorporating a plurality of recording modules according to the invention. In this embodiment, the linear array of recording sources is an LED array which comprises a plurality of light emitting diodes (LEDs) 20 that are mounted on a metal carrier 23 using a module carrier 29 for each group of LEDs. An array of self-focusing fibres 27, such as is manufactured by Nippon Sheet Glass Co. Ltd under the trademarked name "SELFOC", is secured by means of a protective and supportive cap 28 between the LEDs and the receptor 25, thus projecting the light emitted by the LEDs onto the receptor surface 26. Both the metal carrier 23 and the cap 28 are attached to a supporting bar 30, said supporting bar providing mechanical stability and cooling (e.g. using water as a cooling fluid) to the recording head. A pair of interconnecting printed circuit boards 31 route the necessary control and data signals via a connector (not shown) between the different parts of the recording head and other parts of the printer.

In this embodiment, the LEDs are part of a plurality of monolithic integrated circuits 21, each of such LED-chips comprising a plurality of LEDs. Within this chip, the LEDs are positioned on one row and are equally spaced apart. Each LED-chip 21 is accompanied by two semiconductor driver chips 22 wherein each of said driver chips provides an electronic circuit for controlling the subset of N LEDs of a recording module. In the example said subset comprises N = 64 LEDs. The driver chips 22 are positioned on opposite sides of the LED-chips 21, wherein those on one side control the even numbered LEDs, while those on the other side control the odd numbered LEDs. Both the LED-chips 21 and the driver chips 22 are mounted, by means of adhesive bonding, on a module carrier 29. In the example, the recording head comprises 7424 LEDs, being divided over 58 LED-chips. each Incorporating $2 * N = 128$ LEDs. The number of recording modules M thus equals 116. As the LED's centres are positioned 42.3 $\mu$m apart, the array of LEDs covers a recording width of $7424 * 0.0423 = 314$ mm. Each subset of 64 even or odd numbered LEDs thus measures about 5.4 mm in length.

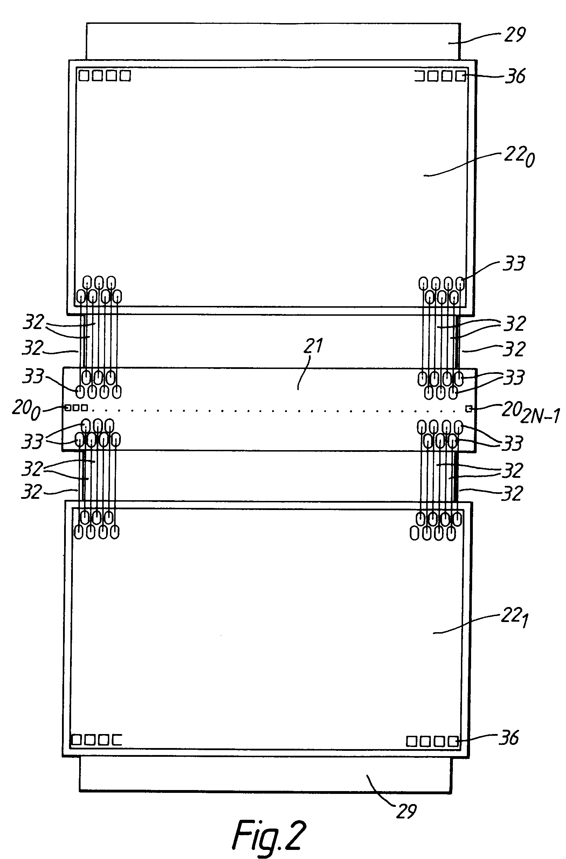

As is shown in Figure 2, an LED chip 21 incorporating $2 * N$ LEDs numbered $20_0, ... 20_{2N-1}$ together with its associated driver chips $22_0$ and $22_1$ are mounted on a module carrier 29. Each of the N outputs of the driver chips is connected to the corresponding LED by means of a wire bonding, materialised by wires 32 and bonding pads 33. By mounting a plurality of the thus formed mechanical subassemblies next to each other on a metal carrier 23, a linear array of recording sources of almost any length can be formed. Electrical connections to the said interconnecting printed circuit boards are made by means of wire bonding to bonding pads 36.

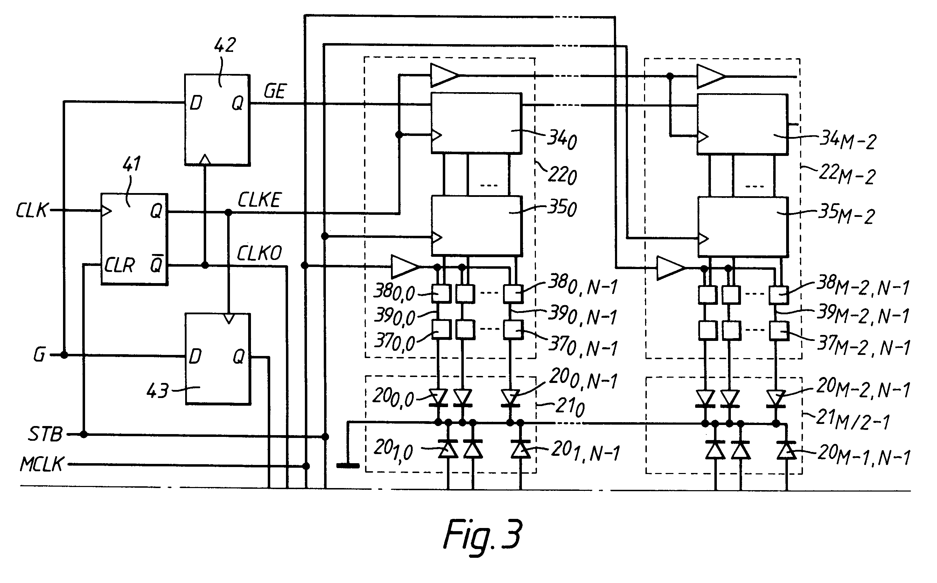

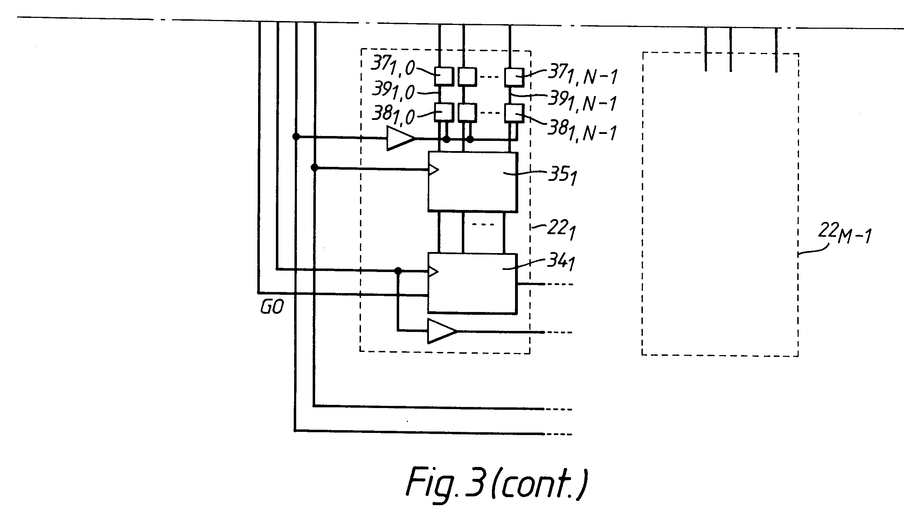

Figure 3 shows a schematic of an electronic circuit controlling the above described recording head. When line-wise printing an image, a stream of n-bit gradation values $g_j$ for each of the individual spots of a line is received via signal G under control of a signal CLK. As such, each of said n-bit gradation values $g_j$ can represent $2^n$ different gradation levels. From the CLK-signal, having a frequency $f_C$, divider 41 produces two signals CLKE and CLKO, being opposite in phase to each other and having a frequency that equals half the frequency $f_C$. With each rising edge of the signals CLKE and CLKO, the n-bit registers 43 and 42 latch the next odd, respectively even gradation value being received. Under control of the CLKE signal, the gradation values for the even spots are then shifted into n-bit wide and N positions long shift registers $34_0$, $34_2$, .., . $34_{M-2}$ of driver chips $22_0$, $22_2$, ... , $22_{M-2}$, the CLKO signal controls the shifting of the gradation values of the odd spots into the shift Registers $34_1$, $34_3$, ... , $34_{M-1}$ of driver chips $22_1$, $22_3$, ... , $22_{M-1}$. Once the gradation values for all the spots of a single line of the image to be printed is shifted in said shift registers 34, a pulse on the STB-signal latches all gradation values in the N times n positions large latch registers $35_0$, ... , $35_{M-1}$ so that the next line of gradation values can be transferred to the shift registers 34. Once a line of gradation values is loaded in latch registers 35, modulators $38_{0,0},....38_{M-1,N-1}$ will, under control of the signal MCLK, produce M * N control signals $39_{0,0}, ... 39_{M-1,N-1}$ that enable the current sources $37_{0,0}, ... , 37_{M-1,N-1}$ to deliver a constant current to the LEDs $20_{0,0}, ... , 20_{M-1,N-1}$ for a period of time proportional to the gradation value of the respective spot. The light energy thus emitted by LEDs 20 will, projected by the linear lens shown in Figure 1, line-wise, and in relation to the respective gradation values, discharge the pre-charged photoconductive receptor surface (also shown in Figure 1), thereby producing a latent image on said receptor surface. It is considered well known to those skilled in the art that the even driver chips $22_0, 22_2, .. , 22_{M-2}$ and the odd driver chips $22_1, 22_3, ... , 22_{M-1}$ can be made identical although they shift the gradation data in another direction. Each of the drivers therefore is fed with a direction control signal (not shown) which controls the operation of the shift register 34.

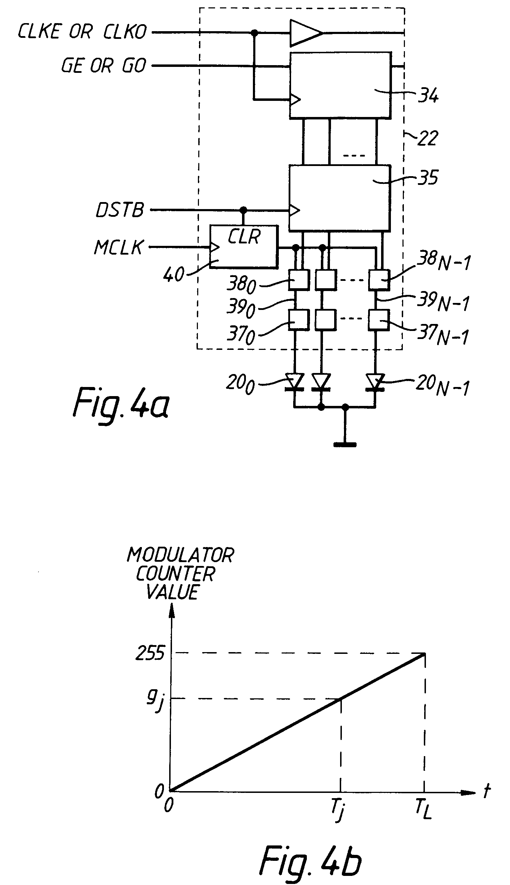

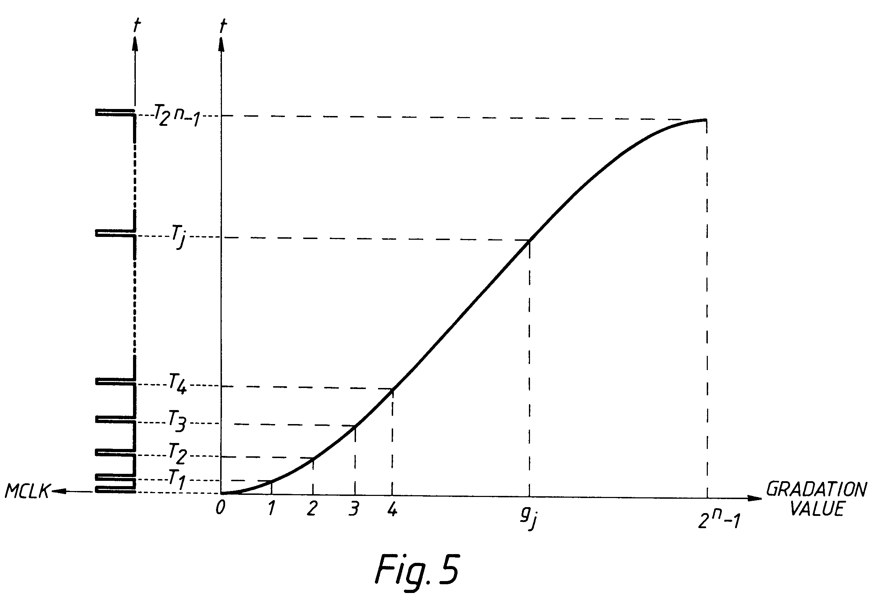

Preferably, as is shown in Figure 4a, each subset of N modulators comprises a single counter 40, which for each line to be printed counts up from 0 to $2^n-1$ under control of the signal MCLK, and N individual comparators $38_0 ... 38_{N-1}$, said comparators enabling current sources $37_0 ... 37_{N-1}$ to operate as long as the counter's value is less than the gradation value $g_j$ presented by the register 35. As such, the comparators act as pulse-width modulators that produce control signals $39_0 ... 39_{N-1}$, the pulse-width $T_j$ of which is proportional to the respective gradation value $g_j$ (see Figure 4b). The pulse-width of the respective control signal equals the sum of the first $g_j$ periods of the signal MCLK. Preferably, said signal MCLK is generated by means of a programmable clock generator circuit (not shown), which actually controls the relation between a spot's gradation value and the associated LEDs operative-time (see Figure 5).

In order to achieve the relationship shown in Figure 5 between the gradation g and the operative time t, the waveform of the MCLK signal, shown in the left hand part of Figure 5, shall be such that for every sub-period of the line period there is a pulse on the MCLK signal. On the ordinate in Figure 5, numerals 0, 1, 2, 3, 4 etc. represent successive gradation values. On the abscissa in Figure 5, $T_1$, $T_2$ etc. represent the respective cumulated sub-periods.

If, for example, the above described recording modules were to be used in a printer, having a spatial addressability of 600 spots per linear inch and a imageable width of 12 inches, said printer operating at a maximum speed of 5 inches per second, the frequency $f_{CLK}$ of the CLK signal of Figure 3 is relatively low, i.e.:

$$f_{CLK} = 5 * 600 * 12 * 600 = 21,600,600 \text{ Hz} = 21.6 \text{ MHz.}$$

Because of the de-multiplexing performed by means of divider 41 and latch registers 42 and 43, the frequency $f_C$ at which the shift registers operate is even lower, i.e

$$f_C = f_{CLK}/2 = 10.8 \text{ MHz.}$$

In addition, this frequency is independent of the number of addressable gradation levels as well as independent of the smallest pulse-width of the signals controlling the LEDs.

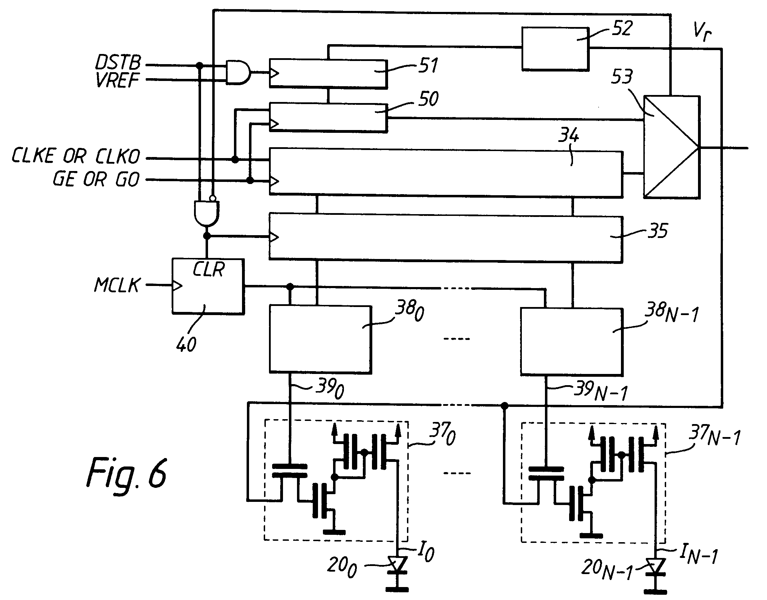

As is shown in Figure 6, the current sources $37_0$ to $37_{N-1}$ of each recording module are preferably constructed by means of a current mirror circuit. Said current mirror produces, under control of the signals $39_0 ... 39_{N-1}$, a constant current $I_i$ to the respective LED i, said current $I_i$ being proportional to an analog reference voltage $V_r$. In order to set the average energy level of a series of N recording sources of a recording module to a predetermined level, each driver chip comprises a second m-positions long shift register 50 and a second m-bit wide latch register 51 connected to a digital-to-analog converter 52, which outputs said voltage $V_r$. Before printing an image and while asserting the signal VREF, a series of said first m-bit correction factors representing the appropriate reference voltage of each driver chip is, like the gradation values, shifted into said second shift register 50 and transferred to the latch register 51. By consequence, the digital-to-analog converter 52 will feed the respective reference voltage $V_r$ to all N current sources of each driver chip, thereby controlling the average energy level produced by each subset of N LEDs. The signal VREF enables the operation of the latch register 51 as well as switches multiplexer 53 which allows the shift registers 50 of each driver chip to be cascaded.

It is well known that the characteristics of some of the electronic components that are incorporated in the described embodiments of the invention, may drift as a consequence of temperature changes, e.g. the optical power emitted by an LED is related to its temperature. Therefore, in another preferred embodiment of the invention, each recording module further comprises a circuit to measure the actual operating temperature of the recording module. It is well known to those skilled in the art that such a circuit can be built around an inversely polarised diode for which the leakage current relates linearly to its temperature. Preferably such a diode is positioned close to the centre of said recording module, thereby ensuring that the measured temperature adequately represents the average temperature of the whole recording module. The measured temperature can be used to control the average current of the LEDs, thereby compensating for the change in output power as a consequence of any change in the operational temperature of the LEDs. Alternatively, the temperature measurement can be used to control the cooling system of the recording module thereby limiting the temperature variations.

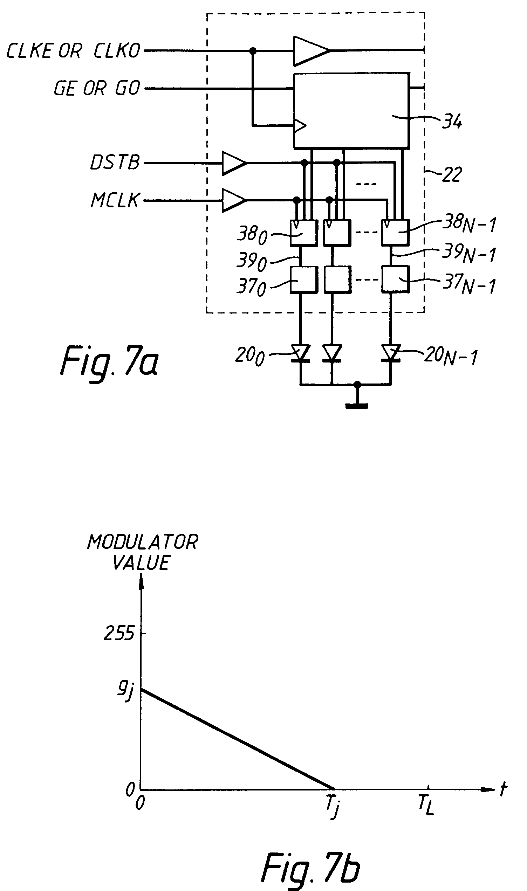

In another embodiment of the recording module, of which a partial block schematic is shown in Figure 7a, the latch register is now an integral part of said

modulators $38_0$ ... $38_{N-1}$, being n-bit down counters. After entering the N n-bit line gradation data into shift registers $34_0$ ... $34_{N-1}$, a pulse on the STB-signal transfers the data for the N pixels to modulators 38 which will, under control of the signal MCLK, count down until they reach the value zero. The outputs $39_0$ ... $39_{N-1}$ of said counters are asserted as long as the counters have not reached the value zero (see Figure 7b), thereby applying currents to the LEDs $20_0$..... $20_{N-1}$ for a period of time proportional to their respective gradation data.

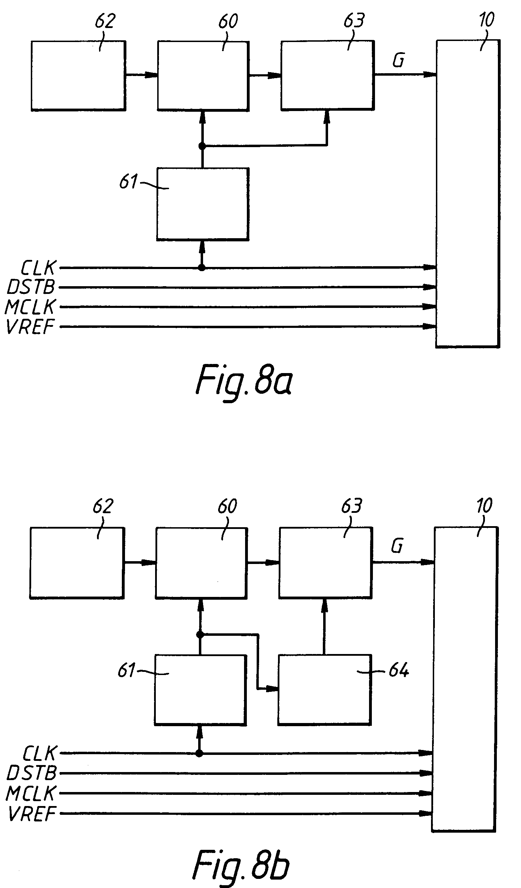

With reference to Figure 8a, the operating principles of the correction means are now described. In order to record an image stored as a two-dimensional array of gradation values in the image memory 60, a pixel counter 61 and a line counter 62 retrieve from said image memory, line after line and pixel after pixel, the gradation values $g_j$ of each pixel. Correction look-up table 63 then translates each gradation value $g_j$ into a gradation value $g_j'$, the latter being the gradation value that, when being applied to the respective LED, produces a spot with an optical density that most closely matches the optical density of a spot recorded by means of a said reference LED when said reference LED is recording a pixel with the same gradation value $g_j$. Signal G then carries said corrected gradation values $g_j'$ towards the recording head 10, as described with reference to Figure 3. The correction look-up table 63 therefore contains a two-dimensional array of gradation values $g_j'$, each position in said array being addressable by a combination of a gradation value $g_j$ and an LED number i.

However, this approach typically leads to an extremely large correction look-up table. In the example, it contains $7{,}424 * 256 = 1{,}900{,}544$ 8-bit gradation values.

Therefore, in a more preferred embodiment of the said correction means, which is illustrated in Figure 8b, an indirect correction approach is introduced. According to this embodiment, the LEDs are, based upon their correction factor $K_i$, classified in a plurality of classes, each of such classes comprising LEDs having about the same factor $K_c$, being the average of all factors $K_i$ of said class. Every LED is now corrected using the correction factor $K_c$ of the class to which the respective LED belongs. The circuit therefore contains a classification table 64 which contains the class number c of each LED. The correction look-up table, as opposed to the previous embodiment, now contains a two-dimensional array of gradation values $g_j'$, each position in said array being addressable by a combination of a gradation value $g_j$ and a class number c. In the example there are $2^8 = 256$ classes so that the classification table 64 holds 7424 8-bit values while the correction look-up table 63 now only contains $256 * 256 = 65{,}536$ 8-bit gradation values.

If however, the period of time $T_j$ is linearly proportional to the gradation value $g_j$, the above described correction is even more simplified so that the correction look-up table can optionally be replaced by a multiplying circuit that directly computes $g_j'$, since this now equals $g_j / K_c$.

Cross-reference to co-pending applications

A number of features of the printers described herein are the subject matter of:
co-pending patent application no .......... entitled "Electrostatographic single-pass multiple-station printer", (attorney's reference 4/Tower/1112D);
co-pending patent application no .......... entitled "Electrostatographic printer with rasterizing means", (attorney's reference 9/Rasterizer/1119D);
co-pending patent application no .......... entitled "Non-impact printer with evenness control", (attorney's reference 3/Evenness/1123D);
co-pending patent application no .......... entitled "LED recording head", (attorney's reference 8/Ldaassembly/1128D);
co-pending patent application no .......... entitled "Temperature controlled LED recording head", (attorney's reference 8A/Ldacooling/1131D); and
all filed on even date herewith.

## Claims

1. A recording module comprising N recording sources (20) and means for gradation-controlling said recording sources by changing their operative periods of time corresponding to recording gradation data having $2^n$ levels, which recording module comprises:

    an N x n-bit shift register (34) having N n-bit gradation data storage addresses and N n-bit outputs, and first clock means for controlling said shift register;

    storage means (35) for storing the contents of the N n-bit gradation data storage addresses of said shift register; and

    N modulators (38), one for each recording source (20), for establishing a relation between the operative period of time and the gradation data for each recording source, and second clock means for controlling said modulators.

2. A recording module according to claim 1, wherein said shift register, said storage means and said modulators are integrated on one semi-conductor chip (22).

3. A recording module according to claim 1 or 2, wherein said modulators are controlled by one modulator counter (40) driven by said second clock means.

4. A recording module according to claims 2 and 3, wherein said modulator counter is likewise integrated on said one semiconductor chip (22).

5. A recording module according to claim 1, wherein said modulator (38) comprises an n-bit down counter,

6. A recording module according to claim 1, wherein said modulator (38) comprises an n-bit comparator.

7. A recording module according to any preceding claim, wherein said storage means is a latch register (35).

8. A recording module according to any preceding claim, wherein the frequency $f_C$, at which the shift register operates, is $f_C \geq f_L * N$, wherein $f_L$ is the line frequency of the recording module.

9. A recording module according to claim 8, wherein the frequency $f_C$ is within the range of up to 1.20 times $f_L' * N$, wherein $f_L'$ is the average line frequency of the recording module.

10. A recording module according to any preceding claim, wherein said recording sources are LEDs, and wherein a constant voltage or constant current source controls said LEDs.

11. A recording module according to any preceding claim, wherein each recording module further comprises a circuit to measure the actual operating temperature of the recording module.

Fig.1

*Fig.2*

Fig. 3

$37_{1,0}$ $37_{1,N-1}$

$39_{1,0}$ $39_{1,N-1}$

$38_{1,0}$ $38_{1,N-1}$

$35_1$

$22_1$

$34_1$

$22_{M-1}$

G0

Fig. 3(cont.)

CLKE OR CLKO

GE OR GO

*34*

*22*

*35*

DSTB

MCLK

CLR

*40*

*38₀* → $38_0$

*39₀* → $39_0$

*37₀* → $37_0$

*38N-1* → $38_{N-1}$

*39N-1* → $39_{N-1}$

*37N-1* → $37_{N-1}$

*20₀* → $20_0$

*20N-1* → $20_{N-1}$

## Fig. 4a

MODULATOR
COUNTER
VALUE

255

$g_j$

0

0

$T_j$

$T_L$

$t$

## Fig. 4b

*Fig. 5*

Fig. 6

DSTB
VREF

CLKE OR CLKO
GE OR GO

MCLK

CLR

40

51

52

50

53

34

35

38₀

38ₙ₋₁

39₀

39ₙ₋₁

37₀

37ₙ₋₁

20₀

20ₙ₋₁

I₀

Iₙ₋₁

Vr

EP 0 630 148 A1

14

CLKE OR CLKO

GE OR GO

34

22

DSTB

MCLK

$38_0$   $38_{N-1}$

$39_0$   $39_{N-1}$

$37_0$   $37_{N-1}$

$20_0$   $20_{N-1}$

## Fig. 7a

MODULATOR
VALUE

255

$g_j$

0    $T_j$    $T_L$    t

## Fig. 7b

*Fig.8a*

*Fig.8b*

EP 0 630 148 A1

## EUROPEAN SEARCH REPORT

**European Patent Office**

**Application Number**
EP 94 30 4263

### DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| P,X<br>Y<br>A | US-A-5 233 337 (TAKAHASHI)<br>* column 3, line 51 – column 4, line 36 *<br>* column 4, line 48 – column 5, line 54 *<br>* abstract; figure 4 *<br>--- | 1,2,7<br>11<br>8,9 | H04N1/40<br>H04N1/18 |
| A | US-A-4 746 941 (PHAM ET AL)<br>* column 2, line 52 – column 4, line 20 *<br>* column 3, line 65 – column 4, line 18 *<br>* column 4, line 52 – column 5, line 1 *<br>* abstract; claim 1; figure 3B *<br>--- | 1,5-7,10 | |
| A | DE-A-34 29 107 (CANON KK)<br>* page 25, line 35 – page 26, line 31 *<br>* page 29, line 1 – page 31, line 15 *<br>* abstract; figure 8 *<br>--- | 1,7,10 | |
| Y | EP-A-0 479 157 (MITA INDUSTRIAL)<br>* column 2, line 50 – column 3, line 12 *<br>* column 5, line 2 – line 13 *<br>--- | 11 | |
| A | EP-A-0 216 365 (HITACHI LTD)<br>* abstract; claim 1 *<br>----- | 11 | TECHNICAL FIELDS SEARCHED (Int.Cl.5)<br><br>H04N<br>G06K |

The present search report has been drawn up for all claims

| Place of search | Date of completion of the search | Examiner |
|---|---|---|
| THE HAGUE | 25 August 1994 | Isa, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

17